# EUROPÄISCHE PATENTANMELDUNG

(11) **EP 3 045 375 A1**
(43) Veröffentlichungstag der Anmeldung: **20.07.2016**
(21) Anmeldenummer: 15151332.2
(22) Anmeldetag: 15.01.2015
(51) Int. Cl.: B62B 3/06, B62B 3/10, B66F 9/06, B66F 9/18

(54) **Vertikal-Hubwagen**

(71) Anmelder: Fross, Jürgen, 79331 Teningen (DE)
(72) Erfinder: Fross, Jürgen, 79331 Teningen (DE)
(74) Vertreter: Stürken, Joachim

(57) **Zusammenfassung**

Die Erfindung betrifft eine Vorrichtung zum Aufnehmen, Anheben und Transportieren von schweren Gegenständen, die jederzeit in einer aufrechten Position verbleiben sollen.

Der erfindungsgemäße Vertikal-Hubwagen dient dem Aufnehmen, Anheben und Transportieren eines Gegenstands (1) in aufrechter Position. Er umfasst eine fortbewegbares Fahrgestell (3), ein Hubgestell (4), welches einen Aufnahmebereich (5) bildet und kippgesichert sowie mindestens in vertikaler Richtung (6) verfahrbar ist und einen Greifmechanismus (8) aufweist, der biegeschlaffe Haltemittel (11A, 11B) umfasst, die an den Enden an Befestigungspunkten gesichert sind, von einer Beladungsseite (2) weg weisend durch den Aufnahmebereich (5) verlaufen und mittels eines Spannantriebs (12) verkürzbar sind, so dass der Gegenstand (1) durch Verkürzen der Haltemittel (11A, 11B) zunächst vom Greifmechanismus (8) unter weitgehender Umschließung aufnehmbar und anschließend durch vertikales Bewegen des Hubgestells (4) reibschlüssig anhebbar und transportierbar ist.

## Beschreibung

### Einleitung

Die Erfindung betrifft eine Vorrichtung zum Aufnehmen, Anheben und Transportieren von Gegenständen. Insbesondere betrifft die Erfindung eine solche Vorrichtung, mit welcher schwere Gegenstände, die jederzeit in einer aufrechten Position verbleiben sollen, aufgenommen, angehoben und transportiert werden können.

### Stand der Technik und Nachteile

Schwere, unhandliche Gegenstände wie Pflanzenkübel, Fässer oder so genannte "weiße Ware" (Kühlschränke und dergleichen) lassen sich nur eingeschränkt und häufig unter Gefährdung der Gesundheit von Personen ohne technische Hilfsmittel bewegen. Daher sind aus dem Stand der Technik vielfältige Vorrichtungen wie z.B. einfache Sackkarren, manuell betätigbare Hubwagen ("Ameisen") und motorisch angetriebene Gabelstapler bekannt. Diese Vorrichtungen erlauben ein Aufnehmen, Anheben und anschließendes Transportieren des Gegenstands. Oftmals sollen oder müssen besagte Gegenstände jederzeit in aufrechter Positionierung verbleiben.

Eine manuell verwendbare Sackkarre für Blumenkübel und dergleichen ist beispielsweise aus der Anmeldung EP 1 500 568 A2 bekannt. Ein insbesondere für Stapel aus Autoreifen verwendbares Modell offenbart die Druckschrift EP 0 957 040 A2. Diese Sackkarren sind einfach und robust aufgebaut, weisen jedoch den Nachteil auf, dass der Gegenstand zum Unterfahren gekippt oder auf eine Palette gelegt werden muss, bevor er aufgenommen, angehoben und transportiert werden kann. Auch während des Transportierens verbleibt der Gegenstand in gekippter Ausrichtung. Das Kippen ist jedoch in bestimmten Fällen unerwünscht. Zudem bringt der gekippte Transport die Gefahr des Überkippens mit sich. Außerdem kann die dauerhafte Nutzung eines solchen Transportgeräts bei unsachgemäßer Benutzung zu Gesundheitsschäden (Rückenproblemen) des Benutzers führen.

Zum Anheben mit hydraulischen Hubwagen oder Gabelstaplern werden die "Gabeln" - längliche, an der Vorderseite der Hilfsvorrichtung angebrachte, meist abgeflachte Stangen - zunächst unterhalb des Gegenstands positioniert. Um dies zu ermöglichen, muss der Gegenstand entweder gekippt werden oder sich auf einer weiteren Hilfsvorrichtung (Palette) befinden, damit er ohne Kippen unterfahren werden kann. Die Verwendung von Paletten umgeht zwar das Kippen, bringt jedoch den Nachteil weiterer Hilfsmittel (Paletten) mit sich, deren Beschaffung und Lagerung zusätzliche Kosten verursacht.

Alternative Ausführungsformen von Hubwagen oder Gabelstaplern wirken mit an der Unterseite oder seitlich am Gegenstand vorzusehenden Aufnahmen für die Hubvorrichtung zusammen. Somit entfällt zwar die Verwendung von Paletten und auch die Notwendigkeit des Kippens, der Gegenstand muss jedoch entsprechende Aufnahmen für die Hubvorrichtung aufweisen. Beispielsweise wird in der Druckschrift US 5 678 976 A ein Handwagen zum Transportieren größerer Fässer mit einem Fahrgestell sowie zwei voneinander beabstandeten Armen, die im oberen Bereich eines senkrechten, am Fahrgestell befestigten Rahmens angeordnet und zur Aufnahme des oberen Kragens eines gegebenen Fasses ausgelegt sind. Die Vorrichtung verfügt zudem über eine Deichsel und ermöglicht die Freistellung des Fasses vom Boden sowie dessen Transport, indem das freie Ende der Deichsel nach unten gedrückt und die Vorrichtung in Transportrichtung verfahren wird. Dies ist nur in Fällen wirtschaftlich, in denen die Behälter in einem abgeschlossenen Umfeld immer wieder für die gleichen Zwecke verwendet werden (z.B. Kokillen im Stahlwerk) oder stets die selben Abmessungen bzw. Aufnahmen aufweisen. Zudem bedingen seitlich am Gegenstand angebrachte Aufnahmen oder obere Transportkragen eine entsprechend stabile Konstruktion desselben, da punktuell die an den Aufnahmen eingeleiteten Kräfte nicht zu einer Beschädigung oder gar einem Bruch des Gegenstands führen dürfen. Dies macht den Gegenstand entsprechend schwerer und teurer. Insbesondere Gegenstände aus spröden Materialien wie Ton, Glas oder Keramik sind daher nur eingeschränkt mit derartigen Aufnahmen auszustatten.

Die Druckschrift US 4 084 706 A beschreibt eine Vorrichtung zum Anheben und Transportieren von sperrigen Gegenständen mit einem Fahrgestell und einem Paar horizontal bereitgestellter Arme, die an einem vertikalen Abschnitt des Fahrgestells freitragend befestigt sind, zur Aufnahme eines Gegenstandes verkürzbare Haltemittel aufweisen, und zum Anheben eines Gegenstandes mittels eines Hydrozylinders vertikal bewegt werden können. Eine ähnliche Vorrichtung mit einem aus zwei Greifarmen bestehenden Mechanismus zum Umgreifen oder Freigeben eines Gegenstandes, jedoch ohne Fahrgestell, wird in der Druckschrift US 2006/0104764 A1 zur Montage an ein übliches Fahrzeug zur Entsorgung von Müll aus entsprechenden Mülltonnen vorgeschlagen. Auch hier erfolgt das Öffnen und Schließen der Greifarme wie auch das vertikale Verfahren des Greifmechanismus' mit Hilfe entsprechend ausgestalteter Hydrozylinder. Hydraulische Systeme sind jedoch aufwendig und deren Betriebsmittel sind in manchen Anwendungsbereichen wie z.B. in der Lebensmittel verarbeitenden Industrie nicht gestattet.

### Aufgabe der Erfindung und Lösung

Die Vorrichtung soll die Nachteile des Standes der Technik vermeiden.

Demnach soll die Vorrichtung den aufzunehmenden, anzuhebenden und zu transportierenden Gegenstand jederzeit in einer aufrechten Position belassen, ohne dass dieser unterfahren werden muss. Ferner soll die Vorrichtung kostengünstig hergestellt und ohne hydraulische Hilfsmittel bestimmungsgemäß eingesetzt werden können.

Die Vorrichtung soll auch zum Aufnehmen, Anheben und Transportieren eines Gegenstands aus bruchempfindlichem Material geeignet sein.

Die Nutzung der Vorrichtung soll das Auftreten von Gesundheitsschäden auch bei häufiger und/oder aufgrund unsachgemäßer Nutzung oder Nutzung durch eine unerfahrene Person praktisch ausschließen.

Die Aufgabe wird durch eine Vorrichtung nach Anspruch 1 oder 2 gelöst. Vorteilhafte Ausführungsformen sind den jeweiligen Unteransprüchen, der Beschreibung sowie den Figuren zu entnehmen.

### Beschreibung

Ein erfindungsgemäßer Vertikal-Hubwagen (kurz: Hubwagen) dient zum Aufnehmen, Anheben und Transportieren eines Gegenstands, wobei letzterer in aufrechter Position verbleibt. Das bedeutet, dass der Gegenstand weder zum Aufnehmen, noch zum Anheben oder Transportieren (Fortbewegen) aus der aufrechten Position in eine gekippte oder gar liegende Position gebracht werden muss. Dies ist beispielsweise bei mit Flüssigkeit befüllten, offenen Behältern, bei mit Gewächsen bestückten Pflanzenkübeln oder bei Kühlschränken der Fall. Auch Stapel von losen Gegenständen wie z.B. übereinander gelegte Autoreifen müssen in aufrechter Position verbleiben, damit die Stapel nicht umkippen.

Der Hubwagen hat ein fortbewegbares, zu einer Beladungsseite hin offenes Fahrgestell sowie ein ebenfalls mindestens zu dieser Beladungsseite hin offenes Hubgestell, welches entweder an dem Fahrgestell oder an mindestens einem mit dem Fahrgestell verbundenen Präzisionsprofil befestigt bzw. vertikal verfahrbar angeordnet ist. Demnach sind die Funktionen "Anheben" und "Transportieren" (Fahren) konstruktiv voneinander entkoppelt. Der Hubwagen hat typischerweise eine einzige Beladungsseite, also eine Seite, welche dem zu transportierenden Gegenstand vor dessen Aufnehmen zugewandt sein muss, damit eine Aufnahme möglich ist. Es ist aber auch möglich, einen Hubwagen mit mehreren Beladungsseiten, beispielsweise wie ein symmetrisches "H" oder ein "W" zu konstruieren.

Das Hubgestell bildet einen zur Beladungsseite hin offenen, für den Gegenstand vorgesehenen Aufnahmebereich und ist aufgrund seiner Befestigung am Fahrgestell mittels gegenüberliegend einer Längsachse des Hubwagens angeordneten Parallelogramm-Kinetiken oder seiner Anordnung an mindestens einem an dem Fahrgestell befestigten Präzisionsprofil relativ zum Fahrgestell kippgesichert, damit der einmal aufgenommene Gegenstand nicht die aufrechte Position verliert. Damit ein Anheben des Gegenstands möglich ist, ist das Hubgestell mindestens in vertikaler Richtung unter Verwendung eines Hubantriebs verfahrbar. Der Hubantrieb stellt demnach die Kraft bereit, welche zum vertikalen Verfahren des Hubgestells benötigt wird.

Ferner weist das Hubgestell einen Greifmechanismus auf, der nicht-biegeschlaffe und um eine vertikale Drehachse rotierbare Greifbacken, an deren Enden Befestigungspunkte angeordnet sind, sowie beidseitig des Aufnahmebereichs positionierbare Haltemittel umfasst, die zumindest abschnittsweise (und zumindest in eine Richtung) biegeschlaff sind, an den zur offenen Beladungsseite hin weisenden Enden an den Befestigungspunkten gesichert sind, von der Beladungsseite weg weisend durch den Aufnahmebereich hindurch, und vorzugsweise innerhalb des Aufnahmebereichs aufeinander zu verlaufen, bevor sie in einem der Beladungsseite gegenüberliegenden Umlenkbereich zusammenlaufen und von dort zu einem Spannantrieb weitergeführt, sowie mittels des Spannantriebs verkürzbar sind. Als biegeschlaffe Haltemittel kommen insbesondere Flachgurte in Betracht. Aufeinander zu verlaufende Haltemittel haben den Vorteil, dass nicht nur eckige, sondern auch runde Gegenstände oder solche mit spitzwinkligem Grundriss sicher gespannt werden können. Je näher die beiden Haltemittel nach dem Durchlaufen des Aufnahmebereichs beieinander sind, desto weitgehender ist auch die Umschließbarkeit eines von den Haltemitteln aufgenommenen Gegenstands. Es sei aber angemerkt, dass auch innerhalb des Aufnahmebereichs parallel zueinander oder sogar voneinander weg verlaufende Haltemittel zur Realisierung des erfindungsgemäßen Greifmechanismus geeignet sind.

Die Befestigungspunkte an den Greifbacken dienen der Sicherung der Enden der Haltemittel gegen ein vollständiges Einziehen derselben während des nachfolgend beschriebenen Verkürzens. Die Lage der Befestigungspunkte ist so gewählt, dass sie sich, von einem bereits in den Aufnahmebereich eingebrachten Gegenstand aus gesehen, vor demselben, also in zur Beladungsseite hin weisender Richtung, befinden.

Wie erwähnt sind die Haltemittel mittels eines Spannantriebs verkürzbar, so dass der von der Beladungsseite her in den Aufnahmebereich einzubringende Gegenstand durch Verkürzen der Haltemittel durch den Spannantrieb zunächst vom Greifmechanismus unter weitgehender Umschließung aufnehmbar, anschließend durch vertikales Bewegen des Hubgestells unter weiterer Verkürzung der Haltemittel reibschlüssig anhebbar, und schließlich durch Verfahren des Fahrgestells transportierbar ist. Mit anderen Worten führt ein Verkürzen / Anspannen der Haltemittel dazu, dass sich diese mit einem Abschnitt eng an den Gegenstand anlegen und mit diesem eine reibschlüssige Verbindung eingehen (auch "kraftschlüssige" Verbindung genannt). Der Gegenstand ist somit fest gespannt und aufgenommen. Ein weiteres Verkürzen der Haltemittel führt schließlich zu einem Anheben des Gegenstands, wobei sich der vertikale Abstand zwischen dem Hubgestell und dem auf dem Boden verbleibenden Fahrgestell, oder jedenfalls der vertikale Abstand zwischen Hubgestell und Boden vergrößert. Dies kann durch unterschiedliche Konstruktionen erreicht werden, wie nachfolgend anhand zweier alternativer Ausführungsformen detailliert beschrieben wird.

Je nach Anwendungsfall kann der Greifmechanismus ein einziges Paar Haltemittel umfassen, oder er kann mehrere Paare übereinander angeordneter Haltemittel aufweisen. Insbesondere bei sehr hohen Gegenständen (z.B. Kühlschränken), deren Schwerpunkt deutlich oberhalb des (ggf.) untersten Haltemittel-Paares liegt, wird so die Stabilität des aufgenommenen Gegenstands deutlich verbessert. Vorzugsweise werden alle Paare von Haltemitteln mittels des gleichen Spannantriebs betätigt.

Der erfindungsgemäße Hubwagen erlaubt es demnach, den zu transportierenden Gegenstand jederzeit in einer aufrechten Position zu belassen, ohne dass dieser unterfahren werden muss. Es sind weder zusätzliche Paletten noch spezielle Aufnahmen für Hubvorrichtungen erforderlich.

Auch Gegenstände aus bruchempfindlichem Material lassen sich aufnehmen, anheben und transportieren, da durch die Verwendung der biegeschlaffen Haltemittel eine automatische Druckkontrolle des Anpressdrucks gegeben ist, der sich zudem in optimaler Weise gleichmäßig am Umfang des gespannten Gegenstands verteilt. Normale Reibwerte vorausgesetzt, wird der Gegenstand gerade dann, wenn die Reibkräfte zum Anheben ausreichen, auch angehoben, so dass unnötig starke Kräfte vermieden werden.

Bei der Nutzung des Hubwagens sind keine Gesundheitsschäden für den Benutzer zu befürchten, da dieser körperlich geschont wird. Weder wird zum Anheben des Gegenstands eine größere Menge Kraft benötigt, noch muss der Benutzer die aufrechte Position des Gegenstands halten; auch ein Umkippen des Gegenstands ist nur bei grob unsachgemäßer Handhabung zu befürchten. Besondere Erfahrung ist bei der Verwendung des Hubwagens nicht erforderlich.

Wie bereits erwähnt, weist der Greifmechanismus nicht-biegeschlaffe und um eine vertikale Drehachse rotierbare Greifbacken auf, deren Enden die Befestigungspunkte bereitstellen. Mit anderen Worten, der Greifmechanismus hat an seinem in Richtung des aufzunehmenden Gegenstands weisenden Ende Greifbacken, die z.B. als längliche Platten aus Kunststoff, Holz oder aus Metall geformt sein können. Das Material ist vorzugsweise elastisch. Die Greifbacken können je nach Anwendungsfall eine Form aufweisen, die einen Formschluss zur Außenkontur des Gegenstands ermöglicht oder unterstützt, indem sie in etwa die Negativ-Geometrie eines Abschnittes der Außenkontur aufweist. Sollen z.B. eckige Gegenstände aufgenommen werden, eignen sich flache Platten, für runde Formen sind entsprechend gebogene (oder in die gebogene Form biegbare) Platten vorteilhaft. Durch die vertikale Drehachse können die Greifbacken auf- und zuklappen.

Die Haltemittel sind in den Befestigungspunkten derart an den Greifbacken befestigt oder befestigbar, dass letztere mittels der Haltemittel "zugezogen" werden können, d.h., ihre Spitzen bewegen sich in Richtung des Aufnahmebereichs und verringern dabei die verbleibende Größe der an der Beladungsseite liegenden Öffnung, welche zum Einbringen des Gegenstands in den Aufnahmebereich vorgesehen ist. Es ist klar, dass der Vorgang des Schließens insbesondere dann durchzuführen ist, wenn sich der Gegenstand bereits im Aufnahmebereich befindet.

Anders ausgedrückt, durch Verkürzen der gegen Einziehen an den Befestigungspunkten gesicherten Haltemittel klappen die Greifbacken in Richtung des bereits im Aufnahmebereich befindlichen Gegenstands, bis sie sich an diesen anlegen. Da ein weiteres Klappen nun nicht mehr möglich ist, führt ein fortgesetztes Anspannen der Haltemittel zu einem festen Anlegen derselben an die Außenkontur des Gegenstands, der somit aufgenommen werden kann.

Nach einer Variante der beschriebenen Ausführungsform sind die Enden der Haltemittel überlappend an den Befestigungspunkten angeordnet. Auf diese Weise kann der Grad der Umschließung weiter vergrößert werden; insbesondere dann, wenn andernfalls ein unerwünscht großer Abschnitt des in Richtung der Beladungsseite hin weisenden Teils des Umfangs des Gegenstands nicht von den Haltemitteln berührt werden würde. Es ist klar, dass die Enden der Haltemittel hierzu auf einfache Weise von den Befestigungspunkten abnehmbar und wieder an diesen befestigbar, z.B. aus- und einhakbar sein müssen.

Es sei außerdem angemerkt, dass in Fällen, in welchen mehr als ein Paar Haltemittel vorhanden ist (s.o.), vorzugsweise auch eine entsprechende Anzahl Greifbacken vorhanden ist.

Nach einer anderen Ausführungsform weist der Hubwagen keine Greifbacken auf, sondern die in Richtung der Beladungsseite weisenden Enden der biegeschlaffen Haltemittel sind miteinander verbindbar, stellen also gegenseitig die Befestigungspunkte bereit. Demnach wird ein Gegenstand aufgenommen, indem er zunächst in den Aufnahmebereich eingebracht und anschließend mit den freien, da unbefestigten Enden der Haltemittel (z.B. manuell) umreift wird. Sind die Enden nahe genug beieinander, werden sie unmittelbar oder durch ein Verbindungselement (z.B. einen Manschettenabschnitt) miteinander verbunden. Alsdann können die Haltemittel durch Anspannen verkürzt werden, bis sich der vorstehend genannte Formschluss einstellt. Die weiteren Schritte entsprechen dann ebenfalls den vorstehend genannten.

Zur Verbesserung des Reibschlusses durch Vergrößerung der hierfür zur Verfügung stehenden Oberfläche können die Haltemittel auch ein- oder mehrmals nicht-überdeckend um den Gegenstand gewickelt werden, bevor ihre Enden schließlich miteinander verbunden werden.

Nach einer bevorzugten Ausführungsform sind das Fahrgestell und das Hubgestell von oben gesehen U-förmig. Die Beladungsseite ist dann durch die offene Seite des gerundeten oder eckigen "U" gebildet, und der Benutzer wird sich typischerweise hinter der gegenüberliegenden Seite des Hubwagens aufhalten. Nachfolgend befindet sich die Beladungsseite definitionsgemäß an der "Vorderseite", und die ihr gegenüber liegende Seite bildet die "Rückseite" des Hubwagens. Dazwischen erstrecken sich die beiden "Seitenwangen". Die Begriffe "oben" und "unten" beziehen sich auf die vorgesehene Gebrauchslage des Hubwagens.

Alternativ zur beschriebenen U-Form sind z.B. auch H-artige Formen mit zwei Beladungsseiten möglich, um symmetrisch zwei Gegenstände zugleich oder auch getrennt voneinander aufzunehmen. Auch eine spitze V-Form, oder eine W-Form mit einer Beladungsseite, aber zwei Aufnahmebereichen, ist möglich.

Zum Fortbewegen des Fahrgestells sind vorzugsweise an demselben beidseitig der Beladungsseite, also an den beiden Seitenwangen, beispielsweise Räder, Rollen und/oder Raupen angeordnet. Besonders bevorzugt weist der Hubwagen beidseitig symmetrisch gleich verteilte Räder oder dergleichen auf. Um ein einfaches Lenken zu ermöglichen und - bei zwei Rädern - ein Kippen des Fahr- (und somit des Hub-)gestells zu vermeiden, ist vorzugsweise ein Stützrad vorgesehen. Dieses ist am Fahrgestell bevorzugt mittig zwischen den beiden Seitenwangen gegenüber der Beladungsseite und außerhalb des Aufnahmebereichs angeordnet, so dass der Hubwagen insgesamt an drei eine Ebene definierenden Punkten gelagert ist. Besonders bevorzugt ist das Stützrad vertikal drehbar.

Nach einer anderen Ausführungsform ist das Fahrgestell des Hubwagens an ein separates Fahrzeug wie einen Gabelstapler oder einen Traktor ankoppelbar, welcher dann dem Vortrieb des Hubwagens dient.

Eine bevorzugte Konstruktion, mit welcher das Hubgestell kippsicher und gleichzeitig vertikal verfahrbar am Fahrgestell befestigt ist, verwendet (vorzugsweise zwei) gegenüberliegend einer Längsachse des Hubwagens angeordnete Parallelogramm-Kinematiken. Vorzugsweise sind die unten liegenden (mit dem Fahrgestell verbundenen) Verankerungen des Parallelogramms weiter von der Beladungsseite entfernt als die oben liegenden (mit dem Hubgestell verbundenen). Auf diese Weise wird bei einer Betätigung der Kinematik sichergestellt, dass Fahrgestell und Hubgestell immer parallel zueinander stehen, wobei sich die in Richtung der Beladungsseite nach vorn weisende Spitze der Kinematik beim Anheben des Hubgestells von der Beladungsseite weg (nach hinten) bewegt. Steht ein Benutzer hinter dem Hubwagen, so bewegt sich das Hubgestell beim Anheben des Gegenstands zugleich auf den Benutzer zu. Beide Bewegungen - vertikales Anheben und Verfahren nach hinten - verlaufen ohne ein Kippen des Gegenstands.

Nach einer alternativ bevorzugten Konstruktion ist das Hubgestell nicht direkt an dem Fahrgestell befestigt, sondern vertikal verfahrbar an mindestens einem Präzisionsprofil wie z.B. einer Führungsschiene oder einem Führungsrohr angeordnet, wobei das mindestens eine Präzisionsprofil an dem Fahrgestell befestigt ist. Obwohl die zuvor dargelegten Parallelogramm-Kinetiken nach dieser Alternative entbehrlich sind, ist gleichermaßen sichergestellt, dass das Hubgestell gegenüber dem Fahrgestell kippgesichert ist und vertikal verfahren werden kann, wobei das Hubgestell und das Fahrgestell auch hier stets parallel zueinander stehen.

Wie oben bereits erwähnt ist es bevorzugt, dass die biegeschlaffen Haltemittel als Flachgurte ausgestaltet sind. Nach anderen Ausführungsformen sind die Haltemittel ausgewählt aus der Gruppe bestehend aus Gurten, Seilen und Ketten; auch letztere sind zumindest in eine Richtung biegeschlaff. Selbstverständlich sind auch Kombinationen unterschiedlicher Haltemittel denkbar; so kann im vorderen (zur Beladungsseite hin weisenden) Bereich ein Gurt vorgesehen sein, der im hinteren Bereich in Ketten oder Seile übergeht. Außerdem können in den Haltemitteln abschnittsweise auch nicht biegeschlaffe Elemente eingearbeitet sein, beispielsweise Stangen oder Zugplatten. Insbesondere kann ein Teil des Haltemittels, der sich jederzeit außerhalb des Aufnahmebereichs befindet, durch einen beide Stränge der Haltemittel zusammenfassenden, auch nicht-biegeschlaffen Abschnitt realisiert sein (z.B. Zugstange). Auch nicht biegeschlaffe Haltemittelabschnitte, die einen besonderen Formschluss erlauben, sind denkbar, beispielsweise halbrunde Manschetten, welche dem besonders sicheren Greifen von z.B. Autoreifen dienen. Derartige Manschetten können zur Verbesserung des Spannens zusätzlich auch formschlüssig wirkende Vorsprünge wie z.B. Rillen, welche in ein Reifenprofil eintauchen, aufweisen. Auch können sie an ihrer Unterseite einen Vorsprung aufweisen, der so bemessen ist, dass er sich beim Aufnehmen des Gegenstands etwas unter denselben schiebt, ohne das Anlegen der Haltemittel zu behindern.

Nach einer anderen Ausführungsform können die Haltemittel in vertikaler Richtung relativ zum Hubgestell verfahrbar sein. Dies kann hilfreich sein, um dieselben zunächst in eine zum Greifen eines bestimmten Gegenstands optimale vertikale Position zu bringen. Auf diese Weise kann vermieden werden, dass die Haltemittel gerade im Bereich von empfindlichen und/oder störenden, die Haftreibung vermindernden, am Umfang des Gegenstands befindlichen Strukturen anliegen (z.B. Handgriffe bei Pflanzenkübeln). Auch bei übereinander gestapelten Gegenständen kann so vermieden werden, dass gerade in einer Lücke zwischen zwei Gegenständen ein Aufnehmen versucht wird.

Nach einer weiteren Ausführungsform umfasst der Hubwagen einen Käfig, welcher mit dem Fahr- oder dem Hubgestell verbunden ist. Dieser Käfig dient der Sicherung lose gestapelter Ladung wie beispielsweise Autoreifen, bei denen nur der unterste aufgenommen wird. Um ein Kippen oder gar Verlieren der Ladung zu verhindern, sind an den Seitenwangen und an der Rückseite des Hubwagens im wesentlichen vertikal verlaufende Wände, die vorzugsweise aus einem gitterartigen Material bestehen, angebracht. Besonders bevorzugt umfasst der Käfig an seiner Vorderseite auch eine oder zwei in Richtung der Beladungsseite aufklappbare Türen, welche in der angehobenen Position des Hubgestells geschlossen sind. Zum Öffnen in der abgesenkten Position können Federn oder dergleichen eingesetzt werden; beim Anheben kann eine Mechanik, beispielsweise unter Verwendung von Umlenkrollen und Seilen, genutzt werden, welche den Federn entgegenwirkt und die Türen selbsttätig schließt.

Der Spannantrieb dient dem Verkürzen der Haltemittel und wird vorzugsweise in Form einer mit dem Fahrgestell funktionell verbundenen, manuellen oder automatischen Winde bereitgestellt. Der Spannantrieb ist im Falle des Vorhandenseins der Parallelogramm-Kinetiken vorzugsweise an einer mit dem Fahrgestell verbundenen Deichsel angeordnet. Für den Fall der alternativen Bereitstellung mindestens eines Präzisionsprofils ist der Spannantrieb entweder im oberen Bereich des Profils oder, bei beispielhafter Verwendung zweier Profile, die gegenüberliegend einer Längsachse des Hubwagens am Fahrgestell befestigt und über eine im oberen Bereich der Profile vorgesehene Verbindungsstrebe fest miteinander verbunden sind, vorzugsweise mittig an dieser Verbindungsstrebe angeordnet. Mit der Winde lassen sich Gurte, Seile oder Ketten aufwickeln, was zu einer Verkürzung der Haltemittel führt. Zudem lässt sich so auf einfache Weise die zum Verkürzen (und somit Anspannen) der Haltemittel benötigte manuelle oder motorische Kraft verringern, da handelsübliche Winden typischerweise mit einer entsprechenden Untersetzung ausgestattet sind. Um ein unbeabsichtigtes Lösen der Haltemittel zu vermeiden, weisen handelsübliche Winden gewöhnlich einen lösbaren Sperrmechanismus auf. Beim Lösen des Sperrmechanismus verlängern sich die Haltemittel wieder, was zu einem Absenken des Hubgestells und einem nachfolgenden Verlust der reibschlüssigen Verbindung führt, so dass der Gegenstand aus dem Aufnahmebereich entfernbar ist. Hierzu wird vorzugsweise der Gegenstand abgestellt, und der Hubwagen wird von diesem weggefahren.

Vom Spannantrieb unterschieden werden muss der Hubantrieb, der zum Anheben bzw. Absenken des Hubgestells benötigt wird.

Erfindungsgemäß wird der Hubantrieb dadurch bereitgestellt, dass die Haltemittel in einem der Beladungsseite gegenüberliegenden Umlenkbereich zusammenlaufen und von dort aus zum Spannantrieb (z.B. der Winde) weitergeführt sind, wobei der Spannantrieb in vertikaler Richtung höher als der Umlenkbereich angeordnet ist, und wobei der Abstand zwischen Spannantrieb und Umlenkbereich in einer abgesenkten Position des Hubgestells größer als in einer angehobenen Position desselben ist. Somit ist im Wege des Verkürzens der Haltemittel durch den Spannantrieb der Gegenstand zunächst mittels des Greifmechanismus aufnehmbar (s.o.) und anschließend durch weiteres Verkürzen der Haltemittel reibschlüssig anhebbar, so dass er schließlich durch Verfahren des Fahrgestells transportierbar ist.

Anders ausgedrückt: Da der Umlenkbereich an der "Rückseite" des Hubwagens (s.o.) am Hubgestell befestigt oder als integraler Bestandteil desselben ausgestaltet ist, hebt sich das Hubgestell, wenn der Abstand zwischen Umlenkbereich und Spannantrieb verringert wird. Die Abstandsverringerung wiederum wird durch Verkürzen der Haltemittel erreicht. Da diese (nach erfolgtem Aufnehmen des Gegenstands) nicht weiter nachgeben können, "ziehen" sie straff gespannt das Hubgestell nach hinten-oben (entgegen der Beladungsseite), sofern eine mit der weiter vorn beschriebenen Parallelogrammkinematik identische oder gleichwirkende Mechanik wie das alternativ vorgeschlagene mindestens eine Präzisions-profil verwendet wird.

Besonders bevorzugt wird als Spannmittel die vorstehend genannte Winde verwendet. Durch Betätigen derselben wird zunächst der Gegenstand aufgenommen und anschließend angehoben. Nach einem Fixieren der Winde kann der Transport erfolgen.

Nach einer weiteren Ausführungsform weist das Fahrgestell eine zusätzliche Abstellvorrichtung auf. Auf dieser kann der Gegenstand während des Transports abgestellt werden, was das Spannmittel und die Haltemittel entlastet. Hierzu kann das Hubauf dem Fahrgestell in Längsrichtung verfahrbar sein, um den Gegenstand an geeigneter Stelle abzusenken, oder die Abstellvorrichtung kann bei Bedarf einfach in den Aufnahmebereich eingebracht (z.B. eingeklappt) werden. Durch sukzessives Absenken des zuvor weiter angehobenen Gegenstands liegt dieser schließlich auf der Abstellvorrichtung auf.

Nach einer weiteren Ausführungsform des Hubwagens werden die bevorzugt vorhandenen Greifbacken mittels Aufhaltefedern in einer zur Beladungsseite hin offenen Grundposition gehalten. Dies erleichtert das Einbringen des Gegenstands in den Aufnahmebereich, da so die entsprechende Öffnung desselben immer eine maximale Größe aufweist. Zudem sind die an den Greifbacken angeordneten Haltemittel vorgespannt und hängen nicht schlaff herunter, was sonst zu Problemen beim nachfolgenden Benutzen des Greifmechanismus durch verklemmende Haltemittel führen könnte.

Nach einer weiteren Ausführungsform des Hubwagens wirken Federn der Anhebbarkeit des Hubgestells entgegen, um vor dem Anheben des Gegenstands eine Erhöhung der Haftreibung zwischen Gegenstand und Haltemitteln zu bewirken. Insbesondere bei leichten und/oder sehr glatten Gegenständen kann es vorkommen, dass trotz weitgehender Umschließung die Haftreibung nicht ausreichend für ein sicheres Anheben ist. Wird das Gewicht des Gegenstands künstlich erhöht - beispielsweise durch Belasten des Hubgestells mit dem Fuß oder durch besagte Feder(n) - so wird der Anpressdruck zunächst weiter erhöht, bevor der Gegenstand schließlich angehoben wird. Somit erfolgt das Anheben unter erhöhtem Reibschluss.

Vorzugsweise werden hierfür Gasdruckfedern verwendet, welche derart zwischen Fahr- und Hubgestell angeordnet sind, dass sie der Anhebbarkeit des Hubgestells entgegenwirken, ohne das Gewicht des Gegenstands tatsächlich zu erhöhen. Besonders bevorzugt sind die Federn je nach Anwendungsfall optional zuschaltbar und/oder in ihrer Wirkung justierbar, beispielsweise durch Veränderung ihrer Lage und/oder durch Änderung der Federkraft.

Um eine Beschädigung des gespannten Gegenstands zu vermeiden und gleichzeitig ein möglichst sicheres Aufnehmen desselben zu gewährleisten, ist an einer der Beladungsseite gegenüberliegenden Innenseite des Hubgestells ein steifes oder elastisches Widerlager für den Gegenstand angeordnet. Gegen dieses Widerlager wird der Gegenstand gepresst, wenn er im Wege des Verkürzens der Haltemittel in Richtung des Umlenkbereichs gedrückt wird.

Dieses Widerlager kann aus einem formschlüssig an den Gegenstand angepassten Körper bestehen, was jedoch nur im Falle von Gegenständen mit im Wesentlichen gleicher Kontur, und/oder bei elastischen und nicht bruchempfindlichen Gegenständen (z.B. Autoreifen) sinnvoll ist. In diesem Fall ist es bevorzugt, dass das Widerlager in vertikaler Richtung eine Ausdehnung aufweist, die in etwa der Höhe des Gegenstands oder des Stapels der Gegenstände entspricht.

Nach einer anderen Ausführungsform umfasst das Widerlager ein (oder besteht aus einem) zumindest in eine Richtung biegeschlaffen Material, wobei vorzugsweise dessen Enden beidseitig jeweils in einem zwischen der Beladungsseite und der ihr gegenüberliegenden Innenseite befindlichen Seitenbereich des Hubgestells befestigt sind. Bei einem U-förmigen Hubgestell sind die Enden demnach an den Seitenwangen und in der Nähe der Ecken des U befestigt. Das Widerlager besteht vorzugsweise aus dem gleichen Material wie die Haltemittel und ist besonders bevorzugt gurtförmig. Es ist klar, dass die Länge des biegeschlaffen Widerlagers nicht so lang sein darf, dass beim Anliegen des Gegenstands an das biegeschlaffe Widerlager dasselbe zwischen o.g. Innenseite und Gegenstand eingeklemmt ist, sondern jederzeit frei gespannt bleibt, insbesondere die Innenseite des Hubgestells nicht berührt. Selbstverständlich kann das Widerlager auch mehrteilig sein, und/oder aus verschiedenen steifen, elastischen und/oder biegeschlaffen Materialien bestehen. Es kann austauschbar sein, um an unterschiedliche Geometrien von Gegenständen anpassbar zu sein.

Wie dargelegt, löst die Erfindung die aus dem Stand der Technik bekannten Probleme. Auch schwere und/oder bruchempfindliche Gegenstände können mit dem erfindungsgemäßen Hubwagen in jederzeit aufrechter Position aufgenommen, angehoben und transportiert werden. Ein Kippen oder Unterfahren der Gegenstände ist nicht nötig. Der Benutzer wird körperlich geschont, Verletzungen durch hohe Rückenbelastung oder einen überkippenden Gegenstand sind weitgehend ausgeschlossen.

### Figurenbeschreibung

- **Figur 1**: zeigt eine bevorzugte Ausführungsform des erfindungsgemäßen Hubwagens in perspektivischer Ansicht.
- **Figur 2**: zeigt eine schematische Ansicht von oben auf wesentliche Komponenten des unbestückten Hubwagens mit Hubgestell in abgesenkter Position.
- **Figur 3**: zeigt die schematische Ansicht der Fig. 2 mit Hubgestell in abgesenkter Position, bestückt mit einem Gegenstand.
- **Figur 4**: zeigt die schematische Ansicht der Fig. 2 und 3 mit einem im Hubgestell aufgenommenen Gegenstand.
- **Figur 5**: zeigt die schematische Ansicht von der Seite auf wesentliche Komponenten des unbestückten Hubwagens mit Hubgestell in abgesenkter Position.
- **Figur 6**: zeigt die schematische Ansicht der Fig. 5 mit einem Hubgestell in angehobener Position.
- **Figur 7**: zeigt eine alternativ bevorzugte Ausführungsform des erfindungsgemäßen Hubwagens in perspektivischer Ansicht.
- **Figur 8**: ist eine Seitenansicht der in Fig. 7 dargestellten Ausführungsform.
- **Figur 9**: ist eine Vorderansicht der in den Fig. 7 und 8 dargestellten Ausführungsform.
- **Figur 10**: ist eine Draufsicht der in den Fig. 7 bis 9 dargestellten Ausführungsform.

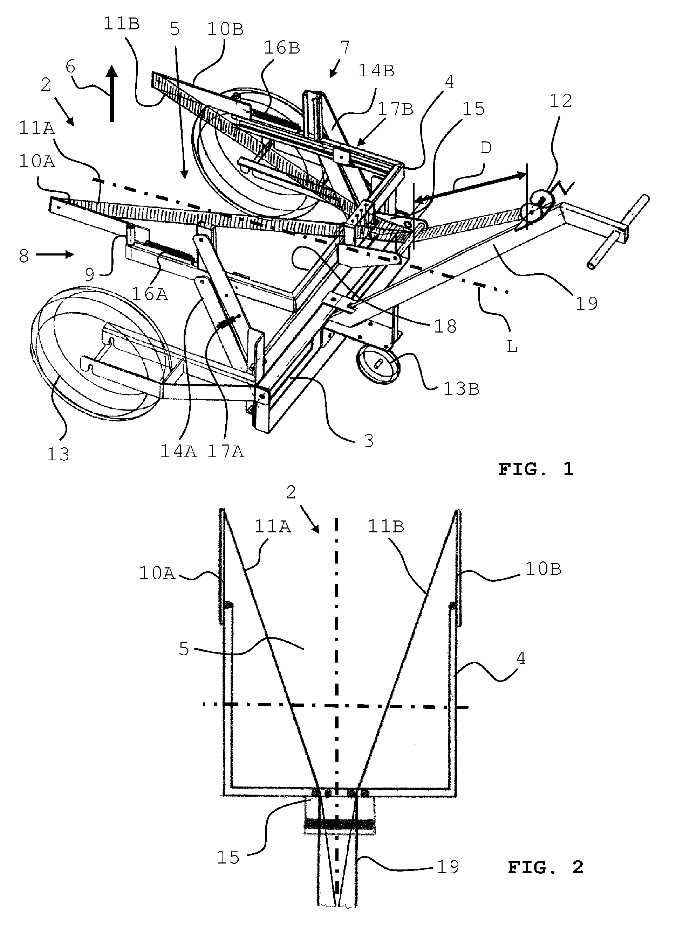

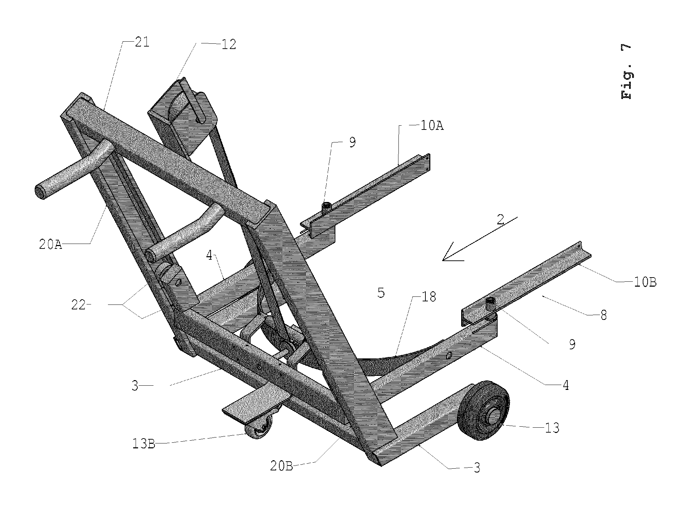

In den Figuren 1 bis 6 ist ein erfindungsgemäßer Hubwagen in seiner Ausgestaltung mit Parallelogramm-Kinematiken 14A, 14B dargestellt, während die Figuren 7 bis 10 einen erfindungsgemäßen Hubwagen mit Präzisionsprofilen 20, 20A, 20B zeigen. Es wird darauf hingewiesen, dass die Komponenten des Fahrgestells 3, des Hubgestells 4, des Spannantriebes 12, des Umlenkbereiches 15 und der Haltemittel 11, 11A, 11B in beiden alternativen Ausführungsformen des Hubwagens identisch vorhanden sein können und vorzugsweise sind, weshalb die Beschreibung und Funktionalität derselben auf beide Alternativen zutrifft, sofern die bauartbedingten Unterschiede in der Konstruktion und Wirkungsweise zwischen den Parallelogramm-Kinematiken 14A, 14B und dem mindestens einen Präzisionsprofil 20 berücksichtigt werden.

Aus Gründen des in den Figuren gezeigten symmetrischen Aufbaus des Hubwagens sind in den Figuren Bezugszeichen ggf. nur für eine Seite des Hubwagens eingezeichnet.

In der **Figur 1** ist eine bevorzugte Ausführungsform des erfindungsgemäßen Hubwagens gezeigt. Dieser umfasst ein Fahrgestell 3, an welchem ein Hubgestell 4 befestigt ist. Beide sind, von oben gesehen, U-förmig ausgebildet. Die offene Seite des U ist die Beladungsseite 2, von welcher aus ein Gegenstand (nicht gezeigt) in den Aufnahmebereich 5 gelangen kann.

Das Hubgestell 4 ist beidseitig mittels je einer Parallelogramm-Kinematik 14A, 14B am Fahrgestell 3 befestigt. Auch beim Anheben des Hubgestells 4 in vertikaler Richtung 6 verbleibt dieses im Wesentlichen parallel zum Fahrgestell 3, kippt also nicht.

Am Fahrgestell 3 sind beidseitig der Längsachse L des Hubwagens Räder 13 angeordnet, so dass der Hubwagen ohne weitere Hilfsmittel verfahrbar ist. Um ein Kippen des Hubwagens insgesamt zu vermeiden, befindet sich im unteren Bereich einer Deichsel 19 ein Stützrad 13B, welches um seine vertikale Achse drehbar ist.

Am Hubgestell 4 ist ein Greifmechanismus 8 befestigt. Dieser umfasst beidseitig des Aufnahmebereichs 5 positionierte, nicht-biegeschlaffe und um eine vertikale Drehachse 9 rotierbare Greifbacken 10A, 10B. Vorliegend sind die Greifbacken 10A, 10B als längliche Platten ausgebildet. An ihren von der Beladungsseite 2 weg weisenden Enden sind Aufhaltefedern 16A, 16B angebracht, welche, wie gezeigt, für eine geöffnete Grundstellung der Greifbacken 10A, 10B sorgen.

Aus Gründen der besseren Sichtbarkeit ist in der Figur 1 die angehobene Position des Hubgestells 4 gezeigt; die dargestellte geöffnete Lage des Greifmechanismus 8 ergibt sich jedoch im Normalfall in der abgesenkten Position.

An den zur offenen Beladungsseite 2 hin (nach vorne) weisenden Enden der Greifbacken 10A, 10B sind biegeschlaffe, vorliegend als Flachgurte ausgebildete Haltemittel 11A, 11B befestigt (schraffiert), welche ein Paar bilden. Die Haltemittel 11A, 11B verlaufen von der Beladungsseite 2 weg weisend durch den Aufnahmebereich 5 hindurch nach hinten (im Bild rechts), durchqueren ihn also. Nach der dargestellten, bevorzugten Ausführungsform verlaufen sie außerdem innerhalb des Aufnahmebereiches 5 auch aufeinander zu.

Zum Abstützen eines aufgenommenen Gegenstands (nicht gezeigt) ist an der hinteren Innenseite des Hubgestells 4 ein Widerlager 18 angeordnet, welches vorliegend einfach durch die der Beladungsseite 2 gegenüberliegende Innenseite des Hubgestells 4 gebildet ist. Vorzugsweise ist das Widerlager 18 jedoch ebenfalls als Flachgurt oder als Formteil ausgebildet (nicht gezeigt).

An der Deichsel 19 ist eine als Spannantrieb 12 dienende Winde befestigt. Mit ihr können die Haltemittel 11A, 11B verkürzt werden. Die Haltemittel 11A, 11B laufen, von der Beladungsseite 2 aus gesehen, zunächst durch einen am Hubgestell 4 angeordneten Umlenkbereich 15, und sind dann weiter zur Winde geführt, mittels derer sie ggf. im Wege des Aufwickelns verkürzt werden können. Wie ersichtlich, ist der Spannantrieb 12 in vertikaler Richtung 6 höher als der Umlenkbereich 15 angeordnet. Beim Anheben des Hubgestells 4 verringert sich der Abstand D zwischen Spannantrieb 12 und Umlenkbereich 15, wie an späterer Stelle detaillierter erläutert wird.

Als Hubantrieb 7 dient demnach die Kombination aus Parallelogramm-Kinematik 14A, 14B, Haltemitteln 11A, 11B, Umlenkbereich 15 und Spannantrieb 12.

Im Bereich der Parallelogramm-Kinematik 14A, 14B sind schematisch dargestellte Federn 17A, 17B angeordnet, welche die zum Anheben des Hubgestells 4 benötigte Kraft vergrößern. Durch diese Federn 17A, 17B wird der Anpressdruck zunächst weiter erhöht, bevor ein Gegenstand schließlich angehoben wird. Dargestellt sind Gasdruckfedern (nur die vordere sichtbar), selbstverständlich sind aber auch anderen Ausführungsformen und Anordnungen möglich.

Die **Figur 2** zeigt eine schematische Ansicht von oben auf Komponenten des unbestückten Hubwagens, nämlich einen Teil der Deichsel 19, das Hubgestell 4, die Haltemittel 11A, 11B, die Greifbacken 10A, 10B sowie den Umlenkbereich 15. Das Hubgestell 4 befindet sich in abgesenkter Position, die Greifbacken 10A, 10B sind in Richtung der Beladungsseite 2 hin offen. Durch die Aufhaltefedern (nicht gezeigt) werden die Greifbacken 10A, 10B in dieser Grundposition gehalten. Wie aus der Fig. 2 gut erkennbar, laufen die beiden Haltemittel 11A, 11B in Richtung des Umlenkbereichs 15 aufeinander zu, bilden demnach von oben gesehen ein symmetrisches Dreieck oder Trapez, dessen gedachte Basis sich zwischen den Enden der beiden Greifbacken 10A, 10B erstreckt. Beim Verlassen des Umlenkbereichs 15 (im Bild nach unten) werden die als Flachgurte ausgeführten Haltemittel 11A, 11B gedreht, um auf der Achse des Spannmittels (nicht gezeigt) aufgewickelt werden zu können.

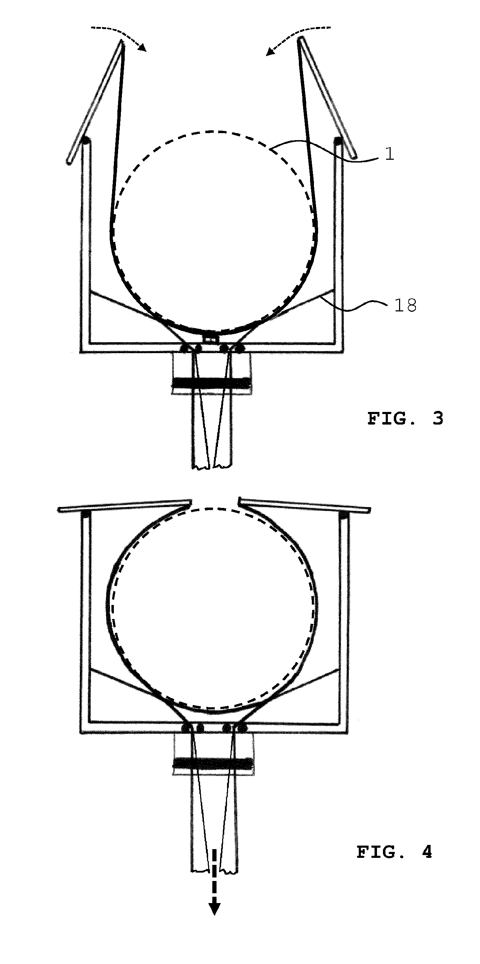

In **Figur 3**, in welcher die bereits eingeführten Bezugszeichen weggelassen wurden, ist ein Gegenstand 1 (Kontur gestrichelt dargestellt) bis an das Widerlager 18 in den Aufnahmebereich eingebracht.

Wie ersichtlich, berührt ein Gegenstand 1, der in den Aufnahmebereich gelangt, mit seiner Außenfläche die Haltemittel, was diese spannt, da er sie im hinteren Bereich (im Bild unten) voneinander weg zu drücken versucht. Dies ist insbesondere dann der Fall, wenn die Haltemittel aufeinander zu laufen. Als Folge der Berührung werden sich die Greifbacken langsam teilweise schließen. Die resultierende Bewegung der Greifbacken ist durch die gebogenen Pfeile (punktiert, ohne Bezugszeichen) angedeutet.

In der **Figur 4** ist eine den Fig. 2 und 3 entsprechende Ansicht, jedoch mit einem Gegenstand, der im Hubgestell aufgenommen ist, gezeigt. Die Haltemittel liegen nunmehr eng an der Außenkontur des Gegenstands an. Auch die Enden der Greifbacken befinden sich in Kontakt mit dem Gegenstand. Die im Bild nach unten zeigende Seite des Gegenstands liegt eng am Widerlager an. Somit ist der Gegenstand im Wege des Verkürzens der Haltemittel fest gespannt und somit aufgenommen.

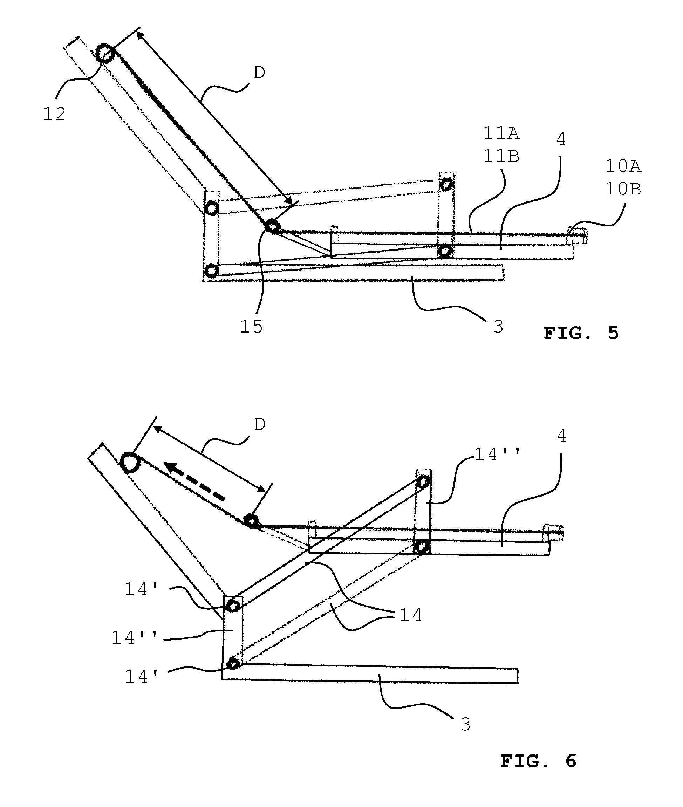

Durch weiteres Anspannen / **Verkürzen** der Haltemittel erfolgt schließlich ein Anheben des Hubgestells. Hierzu werden sie in Richtung des gestrichelten Pfeils (ohne Bezugszeichen) gezogen (vgl. Fig. 6).

Eine Seitenansicht der vorstehend beschriebenen Situation ist in **Figur 5** gezeigt. Die Parallelogramm-Kinematik befindet sich in einer Position, in welcher das Hubgestell 4 in etwa derselben Höhe wie das Fahrgestell 3 und parallel dazu ausgerichtet ist. Die Greifbacken 10A, 10B sind bereits geschlossen (vgl. Fig. 4). Aus Gründen der Übersichtlichkeit ist der Gegenstand nicht dargestellt. Die als Seile ausgeführten Haltemittel 11A, 11B verlaufen von den Greifbacken 10A, 10B zunächst in etwa parallel zum Boden und dann über den Umlenkbereich 15 schräg nach oben bis zum als Winde ausgestalteten Spannantrieb 12, der schematisch als Rolle dargestellt ist. Wie aus der Fig. 5 gut ersichtlich, befindet sich der Spannantrieb 12 höher als der Umlenkbereich 15.

Der Abstand D zwischen Umlenkbereich 15 und Spannantrieb 12 ist verhältnismäßig lang.

In **Figur 6** ist die Situation eines angehobenen Hubgestells gezeigt. Durch Anspannen der Haltemittel in Richtung des gestrichelten Pfeils (ohne Bezugszeichen) verkürzt sich der zwischen Umlenkbereich und Spannmittel liegende Abstand D relativ zur Situation mit abgesenktem Hubgestell. Dies führt zu einem Anheben des Hubgestells 4, da sich die Streben 14 der Parallelogramm-Kinematik jeweils um ihren links im Bild befindlichen Drehpunkt 14' drehen, wodurch die entgegengesetzten Enden der Streben 14 nach oben wandern. Vertikal verlaufende Verbinder 14" koppeln die Streben 14, so dass sie jeweils parallel zueinander verlaufen. Die Verbinder 14" bleiben dabei jederzeit in derselben, wie dargestellt bevorzugt vertikalen Position. An ihnen ist das Hubgestell 4 befestigt, welches somit ebenfalls jederzeit in seiner wie dargestellt bevorzugt horizontalen Position verbleibt, ohne zu kippen. Ein nicht gezeigter, mit dem Greifmechanismus aufgenommener Gegenstand kann so ohne zu kippen angehoben werden. Es ist klar, dass im Anschluss an das beschriebene Anheben auch ein Transportieren des Gegenstands dergestalt erfolgen kann, dass das Fahrgestell 3 mittels der in der Fig. 1 gezeigten Räder fortbewegt wird.

In der **Figur 7** ist eine alternativ bevorzugte Ausführungsform des erfindungsgemäßen Hubwagens ohne Parallelogramm-Kinematik 14A, 14B gezeigt. Wie zuvor umfasst dieser ein Fahrgestell 3 sowie ein Hubgestell 4, welches im Rahmen dieser Ausführungsform jedoch nicht am Fahrgestell 3 befestigt ist, sondern durch Verwendung von Führungsrollen 22 in beidseitig vorhandenen Präzisionsprofilen 20A, 20B vertikal verfahrbar ist, wobei die Präzisionsprofile 20A, 20B ihrerseits fest mit dem Fahrgestell 3 verbunden sind. Obgleich die Präzisionsprofile 20A, 20B vorliegend in Form zweier, zur Position des Umlenkbereichs 15 hin geöffneter Führungsschienen ausgestaltet sind, können vom Fachmann auch andere gleichwirkende Mittel wie z.B. (axial zur Beladungsseite 2 hin geschlitzte) Führungsrohre verwendet werden. Die Präzisionsprofile 20A, 20B sind im oberen Bereich über einen Verbindungsstreben 21, an welchem der Spannantrieb 12 angeordnet ist, miteinander verbunden. Falls gewünscht, kann anstelle zweier Präzisionsprofile 20A, 20B auch nur ein Präzisionsprofil vorgesehen sein (nicht dargestellt), welches dann in Analogie zur Darstellung der Deichsel 19 in Fig. 1 mittig am Fahrgestell befestigt wäre. In diesem Fall wäre das korrespondierende Gegenstück in Form z.B. eines Führungsrollenpaares ebenfalls im mittleren Bereich der "Rückseite" des Hubwagens am Hubgestell 4 befestigt.

Sowohl das Hubgestell 4 wie auch das Fahrgestell 3 sind, von oben gesehen, U-förmig ausgebildet. Die offene Seite des U ist die Beladungsseite 2, von welcher aus ein Gegenstand (nicht gezeigt) in den Aufnahmebereich 5 gelangen kann.

Auch beim Anheben des Hubgestells 4 in vertikaler Richtung 6 verbleibt dieses im Wesentlichen parallel zum Fahrgestell 3, kippt also nicht.

Am Fahrgestell 3 sind beidseitig der Längsachse L des Hubwagens Räder 13 angeordnet, so dass der Hubwagen ohne weitere Hilfsmittel verfahrbar ist. Um ein Kippen des Hubwagens insgesamt zu vermeiden, umfasst das Fahrgestell 3 im mittleren Bereich der "Rückseite" des Hubwagens ein Stützrad 13B, welches um seine vertikale Achse drehbar ist.

Am Hubgestell 4 ist ein Greifmechanismus 8 befestigt. Dieser umfasst beidseitig des Aufnahmebereichs 5 positionierte, nicht-biegeschlaffe und um eine vertikale Drehachse 9 rotierbare Greifbacken 10A, 10B. Vorliegend sind die Greifbacken 10A, 10B als längliche Platten ausgebildet. An ihren von der Beladungsseite 2 weg weisenden Enden sind vorzugsweise Aufhaltefedern 16A, 16B (hier nicht dargestellt, siehe Figur 1) angebracht, welche für eine geöffnete Grundstellung der Greifbacken 10A, 10B sorgen.

An den zur offenen Beladungsseite 2 hin (nach vorne) weisenden Enden der Greifbacken 10A, 10B sind biegeschlaffe Haltemittel 11A, 11B befestigt (hier nicht dargestellt, siehe Figur 1), welche ein Paar bilden. Die Haltemittel 11A, 11B verlaufen von der Beladungsseite 2 weg weisend durch den Aufnahmebereich 5 hindurch nach hinten, durchqueren ihn also. Nach einer bevorzugten Ausführungsform verlaufen sie außerdem innerhalb des Aufnahmebereiches 5 auch aufeinander zu.

Zum Abstützen eines aufgenommenen Gegenstands (nicht gezeigt) ist an der hinteren, der Beladungsseite 2 gegenüberliegenden Innenseite des Hubgestells 4 ein Widerlager 18 angeordnet, welches vorliegend ebenfalls als Flachgurt oder als Formteil ausgebildet ist.

An dem die beiden Präzisionsprofile 20A, 20B verbindenden Verbindungsstreben 21 ist eine als Spannantrieb 12 dienende Winde befestigt. Mit ihr können die hier nicht dargestellten Haltemittel 11A, 11B verkürzt werden.

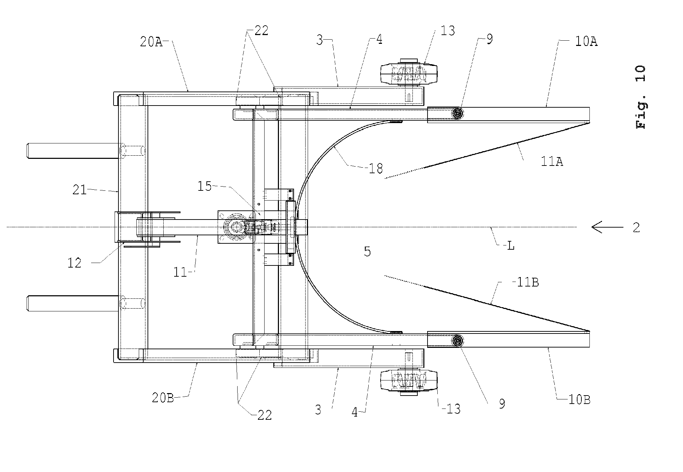

Als Hubantrieb dient demnach die Kombination aus Führungsrollen 22, Präzisionsprofilen 20A, 20B, Haltemitteln 11A, 11B (siehe Figur 10), Umlenkbereich 15 und Spannantrieb 12.

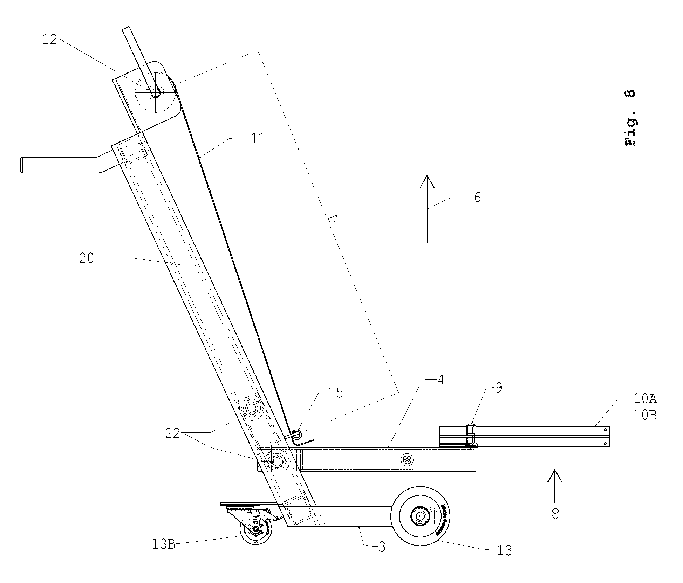

**Figur 8** zeigt den in Fig. 7 dargestellten Gegenstand von der Seite. Wie ersichtlich, ist der Spannantrieb 12 in vertikaler Richtung 6 höher als der Umlenkbereich 15 angeordnet. Beim Anheben des Hubgestells 4 verringert sich der Abstand D zwischen Spannantrieb 12 und Umlenkbereich 15. Während sich die untere Führungsrolle 22 auf der Höhe des Hubgestells 4 befindet und im Endabschnitt der Seitenwange gelagert ist, befindet sich die obere Führungsrolle 22 oberhalb des U-förmigen Hubgestells 4 und ist in einem an dem Hubgestell befestigten, gleichsam vom Hubgestell 4 umfassten Distanzstück gelagert. Beide Führungsrollen können im Präzisionsprofil 20, welches als Führungsschiene ausgestaltet ist, vertikal verfahren werden. Obwohl die Winkelstellung zwischen dem Fahrgestell und dem mindestens einen Präzisionsprofil 20 zwischen 90 und 135° betragen kann, ist ein Winkel zwischen 100 und 120° wie z.B. ein solcher von 110° bevorzugt.

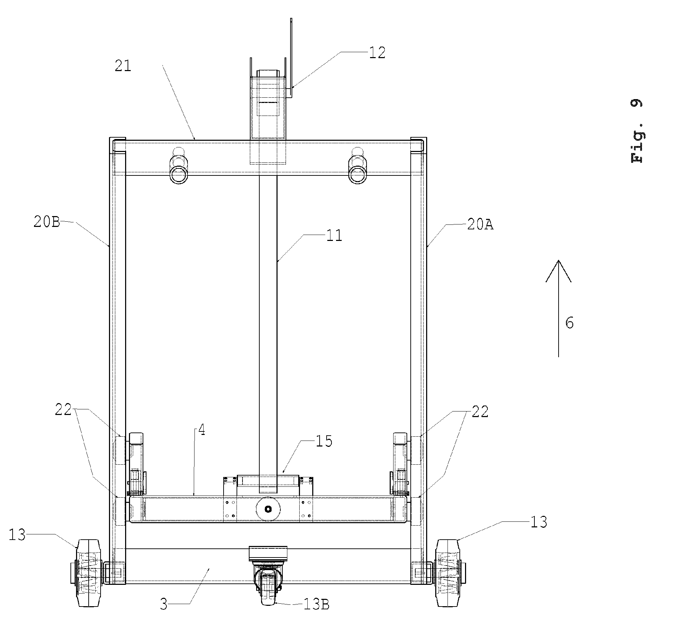

**Figur 9** zeigt den in den Fig. 7 und 8 dargestellten Gegenstand von vorne. Diese Darstellung zeigt sehr genau die Anordnung und Lagerung der beidseitig am Hubwagen 4 angeordneten Führungsrollen 22, die Befestigung der Präzisionsprofile 20A, 20B am Fahrgestell 3, den Verbindungsstreben 21 mit daran befestigtem Spannantrieb 12, und das Haltemittel 11 zwischen dem am Hubgestell 4 befestigten Umlenkbereich 15 und dem Spannantrieb 12. Wie ersichtlich, kann das Hubgestell 4 unter Einsatz des Spannantriebs 12 mit Hilfe seiner Führungsrollen 22 innerhalb der Präzisionsprofile 20A, 20B leicht vertikal verfahren werden.

**Figur 10** zeigt eine schematische Ansicht von oben auf Komponenten des unbestückten Hubwagens in der Ausführungsform der Fig. 7 bis 9, nämlich die Präzisionsprofile 20A, 20B, den Verbindungsstreben 21, die beidseitig angeordneten Führungsrollen 22, das Hubgestell 4, die Haltemittel 11A, 11B (lediglich angedeutet), die Greifbacken 10A, 10B, den Umlenkbereich 15, die Räder 13, den Spannantrieb 12 und einen Teil des Haltemittels 11. Das Hubgestell 4 befindet sich in abgesenkter Position, die Greifbacken 10A, 10B sind in Richtung der Beladungsseite 2 hin offen. Durch die Aufhaltefedern (nicht gezeigt) werden die Greifbacken 10A, 10B in dieser Grundposition gehalten. Wie aus der Fig. 2 noch besser erkennbar, laufen die beiden Haltemittel 11A, 11B, von der Beladungsseite 2 aus gesehen, in Richtung des am Hubgestell 4 angeordneten Umlenkbereichs 15 aufeinander zu, bilden demnach von oben gesehen ein symmetrisches Dreieck oder Trapez, dessen gedachte Basis sich zwischen den Enden der beiden Greifbacken 10A, 10B erstreckt. Beim Verlassen des Umlenkbereichs 15 werden die als Flachgurte ausgeführten Haltemittel 11A, 11B gedreht, um auf der Achse des Spannantriebs 12 aufgewickelt werden zu können.

### Bezugszeichenliste

- 1: Gegenstand
- 2: Beladungsseite
- 3: Fahrgestell
- 4: Hubgestell
- 5: Aufnahmebereich
- 6: vertikale Richtung
- 7: Hubantrieb
- 8: Greifmechanismus
- 9: vertikale Drehachse
- 10A, 10B: Greifbacken
- 11, 11A, 11B: Haltemittel
- 12: Spannantrieb
- 13: Räder
- 13B: Stützrad
- 14: Streben
- 14A, 14B: Parallelogramm-Kinematik
- 14': Drehpunkt
- 14": Verbinder
- 15: Umlenkbereich
- 16A, 16B: Aufhaltefedern
- 17A, 17B: Federn
- 18: Widerlager
- 19: Deichsel
- 20, 20A, 20B: Präzisionsprofil(e), Profil(e)
- 21: Verbindungsstreben
- 22: Führungsrolle(n), Führungsrollenpaar(e)
- L: Längsachse
- D: Abstand zwischen Spannantrieb und Umlenkbereich

## Patentansprüche

1. Vertikal-Hubwagen zum Aufnehmen, Anheben und Transportieren eines Gegenstands (1) in aufrechter Position mit einem fortbewegbaren, zu einer Beladungsseite (2) hin offenen Fahrgestell (3) und einem ebenfalls mindestens zu dieser Beladungsseite (2) hin offenem Hubgestell (4), wobei das Hubgestell (4) einen zur Beladungsseite (2) hin offenen Aufnahmebereich (5) bildet und zur Kippsicherung relativ zum Fahrgestell (3) sowie zur vertikalen Verfahrbarkeit mit dem Fahrgestell (3) verbunden und demgemäß mindestens in vertikaler Richtung (6) verfahrbar ist, und wobei das Hubgestell (4) einen Greifmechanismus (8) aufweist, der nicht-biegeschlaffe und um eine vertikale Drehachse (9) rotierbare Greifbacken (10A, 10B), an deren Enden Befestigungspunkte angeordnet sind, sowie beidseitig des Aufnahmebereichs (5) positionierbare, zumindest abschnittsweise biegeschlaffe Haltemittel (11A, 11B) umfasst, die an den zur offenen Beladungsseite (2) hin weisenden Enden an den Befestigungspunkten gesichert sind, von der Beladungsseite (2) weg weisend durch den Aufnahmebereich (5) verlaufen, in einem der Beladungsseite (2) gegenüberliegenden Umlenkbereich (15) zusammenlaufen und von dort aus zu einem Spannantrieb (12) weitergeführt, sowie mittels des Spannantriebs (12) verkürzbar sind, wobei der Spannantrieb (12) in vertikaler Richtung (6) höher als der Umlenkbereich (15) angeordnet ist, und wobei ein Abstand (D) zwischen Spannantrieb (12) und Umlenkbereich (15) in einer abgesenkten Position des Hubgestells (4) größer als in einer angehobenen Position ist, so dass der von der Beladungsseite (2) her in den Aufnahmebereich (5) einzubringende Gegenstand (1) durch Verkürzen der Haltemittel (11A, 11B) durch den Spannantrieb (12) zunächst vom Greifmechanismus (8) unter weitgehender Umschließung aufnehmbar und anschließend durch vertikales Bewegen des Hubgestells (4) unter weiterer Verkürzung der Haltemittel (11A, 11B) reibschlüssig anhebbar und transportierbar ist.

2. Vertikal-Hubwagen zum Aufnehmen, Anheben und Transportieren eines Gegenstands (1) in aufrechter Position mit einem fortbewegbaren, zu einer Beladungsseite (2) hin offenen Fahrgestell (3) und einem ebenfalls mindestens zu dieser Beladungsseite (2) hin offenem Hubgestell (4), wobei das Hubgestell (4) einen zur Beladungsseite (2) hin offenen Aufnahmebereich (5) bildet und zur Kippsicherung relativ zum Fahrgestell (3) sowie zur vertikalen Verfahrbarkeit mit dem Fahrgestell (3) verbunden und demgemäß mindestens in vertikaler Richtung verfahrbar ist, und wobei das Hubgestell (4) einen Greifmechanismus (8) aufweist, der beidseitig des Aufnahmebereichs (5) positionierbare, zumindest abschnittsweise biegeschlaffe Haltemittel (11A, 11B) umfasst, deren zur offenen Beladungsseite (2) hin weisende Enden miteinander verbindbar sind, wobei die Haltemittel (11A, 11B) von der Beladungsseite (2) weg weisend durch den Aufnahmebereich (5) verlaufen, in einem der Beladungsseite (2) gegenüberliegenden Umlenkbereich (15) zusammenlaufen und von dort aus zu einem Spannantrieb (12) weitergeführt, sowie mittels des Spannantriebs (12) verkürzbar sind, wobei der Spannantrieb (12) in vertikaler Richtung (6) höher als der Umlenkbereich (15) angeordnet ist, und wobei ein Abstand (D) zwischen Spannantrieb (12) und Umlenkbereich (15) in einer abgesenkten Position des Hubgestells (4) größer als in einer angehobenen Position ist, so dass der von der Beladungsseite (2) her in den Aufnahmebereich (5) einzubringende Gegenstand (1) durch Verkürzen der Haltemittel (11A, 11B) durch den Spannantrieb (12) zunächst vom Greifmechanismus (8) unter weitgehender Umschließung aufnehmbar und anschließend durch vertikales Bewegen des Hubgestells (4) unter weiterer Verkürzung der Haltemittel (11A, 11B) reibschlüssig anhebbar und transportierbar ist.

3. Vertikal-Hubwagen nach Anspruch 1, wobei das Hubgestell (4) mittels gegenüberliegend einer Längsachse (L) des Hubwagens angeordneten Parallelogramm-Kinematiken (14A, 14B) am Fahrgestell (3) befestigt ist.

4. Vertikal-Hubwagen nach Anspruch 2, wobei das Hubgestell (4) über mindestens ein am Fahrgestell (3) befestigtes Präzisionsprofil (20, 20A, 20B) mit dem Fahrgestell (3) verbunden ist.

5. Vertikal-Hubwagen nach einem der vorhergehenden Ansprüche, bei dem das Fahrgestell (3) und das Hubgestell (4) von oben gesehen U-förmig sind.

6. Vertikal-Hubwagen nach einem der vorhergehenden Ansprüche, bei dem zum Fortbewegen des Fahrgestells (3) an demselben beidseitig der Beladungsseite (2) Räder (13), Rollen und/oder Raupen angeordnet sind.

7. Vertikal-Hubwagen nach einem der vorhergehenden Ansprüche, bei dem die biegeschlaffen Haltemittel (11A, 11B) ausgewählt sind aus der Gruppe bestehend aus Gurten, Seilen und Ketten.

8. Vertikal-Hubwagen nach einem der vorhergehenden Ansprüche, bei dem der Spannantrieb (12) durch eine mit dem Fahrgestell (3) verbundene Winde bereitgestellt ist.

9. Vertikal-Hubwagen nach einem der Ansprüche 1 und 3 bis 8, bei dem die Greifbacken (10A, 10B) mittels Aufhaltefedern (16A, 16B) in einer zur Beladungsseite (2) hin offenen Grundposition gehalten werden.

10. Vertikal-Hubwagen nach einem der vorhergehenden Ansprüche, bei dem Federn (17A, 17B) der Anhebbarkeit des Hubgestells entgegenwirken.

11. Vertikal-Hubwagen nach einem der vorhergehenden Ansprüche, bei dem an einer, der Beladungsseite (2) gegenüberliegenden Innenseite des Hubgestells (4) ein Widerlager (18) für den Gegenstand (1) angeordnet ist.

12. Vertikal-Hubwagen nach Anspruch 11, wobei das Widerlager (18) aus einem biegeschlaffen Material besteht, dessen Enden beidseitig jeweils in einem zwischen der Beladungsseite (2) und der ihr gegenüberliegenden Innenseite befindlichen Seitenbereich des Hubgestells (4) befestigt sind.
